## Europäisches Patentamt
## European Patent Office
## Office européen des brevets

(11) Veröffentlichungsnummer: **0 172 785**
**B1**

(12) # EUROPÄISCHE PATENTSCHRIFT

(45) Veröffentlichungstag der Patentschrift:
23.11.88

(51) Int. Cl.⁴: **C 21 C 7/00, C 21 C 5/52**

(21) Anmeldenummer: 85730084.2

(22) Anmeldetag: 13.06.85

(54) Metallurgisches Gefäss.

(30) Priorität: 19.07.84 DE 3427066

(43) Veröffentlichungstag der Anmeldung:
26.02.86 Patentblatt 86/9

(45) Bekanntmachung des Hinweises auf die Patenterteilung:
23.11.88 Patentblatt 88/47

(84) Benannte Vertragsstaaten:
AT BE DE FR GB IT LU NL SE

(56) Entgegenhaltungen:
EP-A-0 092 652
EP-A-0 114 376
DE-B-1 508 175
LU-A-83 211
US-A-2 761 003

(73) Patentinhaber: MANNESMANN Aktiengesellschaft, Mannesmannufer 2 Postfach 5501, D-4000 Düsseldorf 1 (DE)

(72) Erfinder: Wamser, Karl, Dipl.- Ing., Augustastrasse 39, D-4130 Moers (DE)

(74) Vertreter: Meissner, Peter E., Dipl.- Ing., Meissner & Meissner Patentanwälte Herbertstrasse 22, D-1000 Berlin 33 Grunewald (DE)

LIBER, STOCKHOLM 1988

### Beschreibung

Die Erfindung betrifft ein metallurgisches Gefäß zur Erzeugung und/oder Behandlung von Metallschmelzen, insbesondere Stahlschmelzen.

Seit Jahren gehört es zum Stand der Technik, derartige metallurgische Gefäße (z. B. Pfanne, Lichtbogenofen) aus Gründen des Arbeits- und Umweltschutzes nach oben hin weitgehend abzudecken und an eine Vorrichtung zur Absaugung der bei der Prozeßführung jeweils entstehenden Gase und Stube anzuschließen. Eine solche Vorrichtung ist beispielsweise aus Techn. Mitt. Krupp, Band 18, (1960) Nr. 3, S. 111 oder auch aus der DE-PS-2 848 948 bekannt.

Andererseits werden zunehmend Metallschmelzen mit besonders hohen Reinheitsgraden gefordert. Das bedeutet z. B. für Stahl schmelzen die Einhaltung extrem geringer Gehalte an Sauerstoff und/oder Stickstoff. Diese sind nur zu erreichen, wenn während der Pfannenbehandlung die Stahlschmelze von der umgebenden Luft möglichst vollständig abgeschirmt wird, z. B. durch Einsatz von Schutzgas oder durch Prozeßführung im Vakuum. Für die Erzeugung von Stählen mit extrem niedrigem Sauerstoffgehalt ist in der EPC-Patentanmeldung 0 092 652 eine Vorrichtung vorgeschlagen worden, die im wesentlichen aus einer Pfanne und einer mit einem Hitzeschild versehenen Absaughaube besteht. Der Hitzeschild deckt die Pfanne nahezu vollständig ab, wobei allerdings zwischen dem Rand der Pfanne und dem Hitzeschild ein umlaufender Luftspalt belassen wird. Über diesen Luftspalt hinweg nach unten erstreckt sich die Absaughaube, deren äußere Wandung mit der Wandung des Gefäßes eine umlaufende Öffnung bildet, durch die mittels einer angeschlossenen Absaugvorrichtung Umgebungsluft angesaugt werden kann. Die Absaughaube und/oder der Hitzeschild weisen eine oder mehrere Öffnungen auf, durch die jeweils eine Lanze in das Innere der Pfanne eingeführt werden kann. Die bei der Pfannenbehandlung aus der Schmelze austretenden Gase und Stäube können über den Luftspalt zwischen Hitzeschild und Pfannenrand in das Innere der Absaughaube überströmen und werden mit der angesaugten Umgebungsluft weggeführt.

Entscheidend für die Funktionsfähigkeit einer solchen Anlage ist neben einer ausreichenden Dimensionierung der Absaugvorrichtung insbesondere die Größe und zeitliche Konstanz der wirksamen Ansaugquerschnitte für die Prozeßgase und die Umgebungsluft. In dieser Hinsicht besteht bei der Vorrichtung gemäß EPC-Patentanmeldung 0 092 652 der Nachteil, daß sich während des Betriebes auf dem oberen Rand der Pfanne Bären bilden können, die verhindern, daß der Hitzeschild bis auf die erforderliche Höhe über der Pfanne abgesenkt werden kann. Der Luftspalt zwischen Pfannenrand und Hitzeschild vergrößert sich dadurch, so daß die Strömungsgeschwindigkeit im Luftspalt und damit der Saugeffekt verringert wird. Da die ebenfalls angesaugte Umgebungsluft an diesem Luftspalt vorbeigeführt wird, dann es vorkommen, daß z. B. infolge einer quer zur Pfanne verlaufenden äußeren Luftströmung auf einer Seite Luft durch den Luftspalt in das Innere der Pfanne hineingedrückt wird, während auf der gegenüberliegenden Seite eine entsprechend erhöhte Gasmenge aus dem Pfanneninneren abgesaugt wird. Somit ist trotz des Einsatzes der Pfannenabsaugung und der Verwendung von Schutzgas beim Einblasen der erforderlichen Stoffe für die Pfannenbehandlung und eines gewissen dadurch im Pfanneninneren bestehenden Überdrucks nicht gewährleistet, daß die Schmelze vor Sauerstoff und Stickstoff aus der Luft abgeschirmt wird. Hilfsweise werden üblicherweise zur Vermeidung dieser Nebeneffekte abdichtende, mit feuerfestem Material gefüllte, wulstförmige Dichtungen auf den Pfannenrand aufgelegt, um eine Abdichtung zu erzielen.

Ein weiterer Nachteil dieser Vorrichtung ist, daß beim Einblasen der Stoffe für die Pfannenbehandlung die Schmelze in Wallung gerät und Gase und Stäube aus der Schmelze austreten, die durch infolge der hohen Temperaturen stets vorhandene starke nach oben gerichtete Gasströmungen (Thermik) mitgerissen werden; das führt dazu, daß trotz der Pfannenabsaugung zumindest ein Teil der Gase und Stäube insbesondere an der zentral angeordneten Lanze vorbei durch die Öffnungen im Hitzeschild bzw. in der Absaughaube nach außen dringt. Diese unkontrollierte thermische Strömung hat auch zur Folge, daß Luft entgegen der gewünschten Strömungsrichtung durch den Ringspalt zwischen Pfanne und Deckel nach innen strömt und dort eine Aufstickung und Sauerstoffaufnahme des Stahl es bewirkt.

Eine andere Vorrichtung zur Abdeckung einer Gießpfanne ist aus der EP-A-114 376 (Dokument nach Art. 54 (3)) bekannt. Hierbei ist die Pfanne durch einen Deckel geschlossen, der außen von einem weitere Deckel mit Abstand umgeben ist. Zwischen beiden Deckeln verbleibt wie bei dem vorher diskutierten Stand der Technik ein nach unten geöffneter Ringraum.

Innerhalb des Gießgefäßes wird ständig ein Überdruck aufrechterhalten, während zwischen den beiden Deckeln kontinuierlich Gas abgesaugt wird, ohne den Überdruck im Gießgefäß - unter dem ersten Deckel - abzubauen. Der erste Deckel soll und muß dicht auf dem Rand des Gießgefäßes sitzen. Ansätze oder dgl. können sich hierbei - wie auch vorher erwähnt - nachteilig auswirken.

Aufgabe der Erfindung ist es, ein metallurgisches Gefäß der eingangs erwähnten Art vorzuschlagen, das eine wirksame Absaugung der Prozeßgase und -stäube und gleichzeitig eine wirksame Abschirmung der Umgebungsluft von der Metallschmelze gewährleistet.

Gelöst wird diese Aufgabe erfindungsgemäß durch ein metallurgisches Gefäß mit den Merkmalen des Patentanspruchs 1. Vorteilhaft Weiterbildungen der Erfindung sind in den Unteransprüchen 2 bis 6 angegeben.

Die Erfindung wird anhand der nachfolgenden Ausführungsbeispiele näher beschrieben. Es zeigen:

Fig. 1 einen teilweisen Querschnitt durch eine Pfanne mit Absaughaube,

Fig. 2 einen teilweisen Querschnitt durch eine Pfanne mit Absaughaube und auf die Pfanne gerichteter Ansaugdüse,

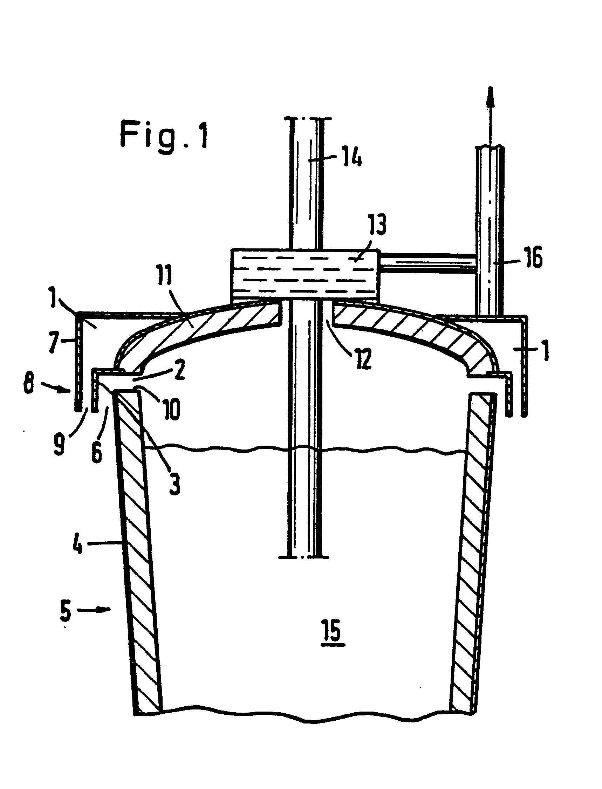

Das in Fig. 1 als Pfanne 5 dargestellte metallurgische Gefäß weist einen Hitzeschild 11 auf, der die Pfanne 5 abdeckt, wobei zwischen dem Hitzeschild 11 und dem oberen Rand 10 der Pfanne 5 ringsum ein Luftspalt 2 frei bleibt. Um den Hitzeschild 11 ist außen herum dicht anliegend eine Absaughaube 1 gelegt. Mit dem Hitzeschild 11 ist eine umlaufende Trennwand 3 dicht verbunden. Die Trennwand 3 überragt den peripheren Luftspalt 2 nach unten hin und bildet mit der äußeren Wandung 4 der Pfanne 5 einen umlaufenden inneren Ringspalt 6, dessen Öffnung tiefer liegt als der Oberrand 10 der Pfanne 5. Die Außenwand 7 der Absaughaube 1 bildet mit der Trennwand 3 einen äußeren Ringspalt, der zu einer ringförmigen Ansaugdüse 8 geformt ist und dessen Öffnung 9 ebenfalls tiefer liegt als der obere Rand 10 der Pfanne 5. Der Hitzeschild 11 weist eine Öffnung 12 auf, durch die eine Lanze 14 von außen in das Innere der Pfanne 5 eingeführt ist, um die Schmelze 15 metallurgisch zu behandeln, z. B. einem Spülvorgang zu unterziehen.

Die Absaughaube 1 ist über die Zuleitung 16 an eine nicht dargestellte Absaugvorrichtung angeschlossen. Die Öffnung 12 ist in Weiterbildung der Erfindung durch eine Dichtung, die um die Lanze 14 herum gelegt ist, nach außen abgedichtet. Diese Dichtung ist vorzugsweise wie in diesem Beispiel als Labyrinthdichtung 13, die ebenfalls an die Absaugvorrichtung angeschlossen ist, ausgebildet.

Die Arbeitsweise der Vorrichtung ist wie folgt:

Beispielsweise bei einem Spülvorgang mit Argon gerät die Schmelze 15 in Wallung, so daß die abdeckende Schlackende auseinandergerissen wird. Um zu vermeiden, daß Sauerstoff oder Stickstoff aus der Umgebungsluft von der Schmelze 15 aufgenommen werden kann, wird über die Zuleitung 16 in der Absaughaube 1 und in der Labyrinthdichtung 13 ein Unterdruck erzeugt. Prozeßgase und Staub, die aus dem Inneren der Pfanne 5 über den Luftspalt 2 nach außen dringen, werden zunächst durch den inneren Ringspalt 6 an der Außenwand 4 der Pfanne 5 nach unten geführt und dann an der Öffnung 9 der Ansaugdüse 8 angesaugt. Während der wirksame Querschnitt des Luftspaltes 2 z. B. durch Bildung von Baren während des praktischen Einsatzes und des dadurch erforderlichen geringeren Absenkens des Hitzeschildes 11 bei jeder Charge anders ausfallen kann, ist die Querschnittsfläche der Düsenöffnung 9 in jedem Fall gleichbleibend, so daß stets gleiche Ansaugbedingungen herrschen. Die Öffnung 9 der Düse 8 läßt sich so bemessen, daß hohe Strömungsgeschwindigkeiten und damit eine wirksame Absaugung wie bei einem Staubsauger gewährleistet sind. Damit ergibt sich gegenüber dem Stand der Technik, bei dem wegen der erwähnten Bärbildung eine unzureichende Absaugung auftreten kann, bereits ein wesentlicher Vorteil. Weiterhin ist sichergestellt, daß äußere, quer auf die Pfanne 5 gerichtete Luftströmungen nicht in das Pfanneninnere eindringen können, da sie unmittelbar von der Ansaugdüse 8 abgesaugt werden.

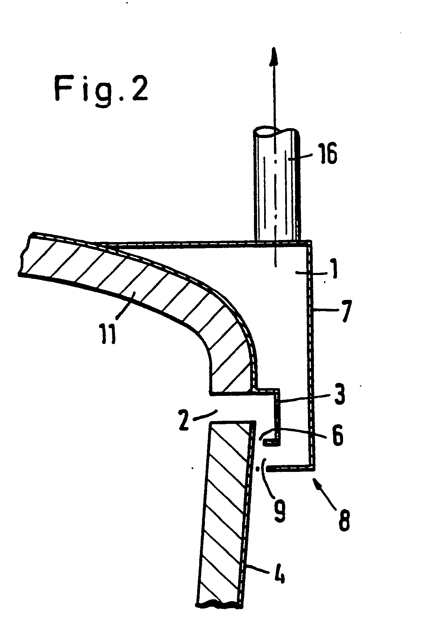

Um die Saugwirkung der Ansaugdüse 8 bezüglich der Absaugung von Gasen und Stäuben zu Lasten der Ansaugung von Umgebungsluft zu verbessern, ist es vorteilhaft, die Öffnung 9 der Absaugdüse 8 auf die äußere Wandung 4 des Gefäßes 5 zu richten, wie es in Fig. 2 dargestellt ist.

Beim Stand der Technik wird die von außen angesaugte Luft in jedem Fall an dem Luftspalt 2 zwischen Hitzeschild 11 und dem oberen Rand 10 der Pfanne 5 vorbeigeleitet, so daß bei Unzureichender Strömungsgeschwindigkeit bei der Absaugung die Gefahr besteht, daß die Querströmung in das Pfanneninnere eindringt und dadurch die Schmelze 15 mit der Luft in Kontakt kommt. Da es im Bereich über dem Spülfleck der Lanze 14 zu einer starken Thermik, d.h. nach oben gerichteten Gasströmungen kommt, besteht unter Umständen die Gefahr, daß Gase und Staub durch die Öffnung 12 nach außen dringen. Durch die Labyrinthdichtung 13 wird das jedoch sicher vermieden, da diese Gase mit dem Staub sofort abgesaugt werden.

Es ist auch möglich, die Absaughaube 1 so auszubilden, daß sie den Hitzeschild 11 nach oben hin vollständig einhüllt. In diesem Fall wird die Lanze 14 durch eine entsprechende Öffnung in der Absaughaube 1 geführt, wobei die Öffnung vorzugsweise wiederum durch eine entsprechende Dichtung, insbesondere eine Labyrinthdichtung, nach außen abgedichtet wird.

Es versteht sich von selbst, daß auch mehrere Öffnungen 12 für die Einführung von Mitteln zur Schmelzenbehandlung von außen in das Innere des Gefäßes 5 vorgesehen sein können. Solche Mittel müssen nicht unbedingt Lanzen oder Sonden sein, sondern können auch z. B. in Elektroden bestehen, so daß die Erfindung also auch z. B. auf ein als Lichtbogenofen ausgebildetes metallurgisches Gefäß anwendbar ist.

Das erfindungsgemäße mtallurgische Gefäß vermeidet die beim Stand der Technik bestehende Gefahr eines unerwünschten Kontaktes von Schmelze und Umgebungsluft und gewährleisten darüber hinaus, daß die im metallurgischen Prozeß entstehenden Gase und Stäube vollständig abgesaugt werden, auch wenn sich am oberen Rand des metallurgischen Gefäßen bereits Bären gebildet haben.


**Patentansprüche**

1. Metallurgisches Gefäß mit einem unter Belassung eines peripheren Luftspaltes darüber angeordneten Hitzeschild, der mindestens eine Öffnung aufweist, durch die jeweils von außen eine Sonde, Lanze oder Elektrode in den Innenraum des Gefäßes geführt ist, und mit einer um den Hitzeschild gelegten, nach unten offenen Absaughaube, die über den peripheren Luftspalt hinausreichend das Gefäß umgibt, und wobei der zwischen dem Hitzeschild und der Absaughaube gebildete Luftraum an eine Absaugvorrichtung angeschlosen ist und wobei innerhalb der Absaughaube (1) eine den peripheren Luftspalt (2) außen vollsändig überragende Trennwand (3) angeordnet ist, die mit der Wandung (7) der Absaughaube (1) eine Ansaugdüse (8) bildet, die das Gefäß (5) umgibt.

2. Metallurgisches Gefäß nach Anspruch 1,
<u>dadurch gekennzeichnet,</u>
daß die Trennwand (3) mit dem Hitzeschild (11) dicht verbunden ist und den Luftspalt (2) über den Rand (10) des Gefäßes (5) hinaus nach unten hin überragt.

3. Metallurgisches Gefäß nach Anspruch 2,
<u>dadurch gekennzeichnet,</u>
daß die Ansaugdüse (8) mit ihrer Ansaugöffnung (9) auf die Wandung (4) des Gefäßes (5) gerichtet ist.

4. Metallurgisches Gefäß nach einem der Ansprüche 1 - 3,
<u>dadurch gekennzeichnet,</u>
daß die Absaughaube (1) den Hitzeschild (11) nur in einem Teilbereich außen einhüllt und die Öffnung oder Öffnungen (12) gegenüber der umgebenden Atmosphäre abgedichtet sind.

5. Metallurgisches Gefäß nach einem der Ansprüche 1 - 4,
<u>dadurch gekennzeichnet,</u>
daß die Absaughaube (1) den Hitzeschild (11) nach oben hin vollständig einhüllt und über der oder den Öffnungen (12) entsprechende Öffnungen in der Absaughaube (1) angeordnet sind, die jeweils mit einer Dichtung versehen sind.

6. Metallurgisches Gefäß nach Anspruch 4 oder 5,
<u>dadurch gekennzeichnet,</u>
daß die Dichtung der Öffnung oder Öffnungen (12) jeweils als Labyrinthdichtung (13) ausgebildet ist, die an die Absaugvorrichtung angeschlossen ist.


**Claims**

1. A metallurgical container with a thermal shield arranged thereover so as to leave a peripheral air gap, which thermal shield has at least one orifice, through which a probe, lance or electrode is guided into the container from outside, and with an extraction hood, opening downwards, placed around the thermal shield, which surrounds the container and extends over the peripheral air gap, wherein the air chamber formed between the thermal shield and the extraction hood is connected to an extractor and wherein a partition (3) is arranged inside the extraction hood (1) which completely projects over the peripheral air gap (2) externally and which forms a suction inlet channel (8) with the walls (7) of the extractor hood (1), which channel surrounds the container (5).

2. A metallurgical container in accordance with claim 1, characterised in that the partition (3) is tightly joined to the thermal shield (11) and protrudes over and below the air gap (2) over the edge (10) of the container (5).

3. A metallurgical container in accordance with claim 2, characterised in that the suction inlet channel (8) with its inlet orifice (9) is directed at the walls (4) of the container (5).

4. A metallurgical container in accordance with one of claims 1 to 3, characterised in that the extraction hood (1) only partially envelops the thermal shield (11), and the orifice or orifices (12) is/are sealed from the surrounding atmosphere.

5. A metallurgical container in accordance with one of claims 1 to 4, characterised in that the extraction hood (1) completely envelops the top of the thermal shield (11) and corresponding orifices are arranged in the extraction hood (1) over the orifice or orifices (12), each of which is fitted with a seal.

6. A metallurgical container in accordance with claim 4 or 5, characterised in that the seal of the orifice or orifices (12) is, in each case, formed as a labyrinth seal (13) which is connected to the extractor.


**Revendications**

1. Réservoir métallurgique avec, disposé sur lui en laissant une fente circulaire, un bouclier thermique présentant au moins une ouverture à travers laquelle est introduite de l'extérieur vers l'intérieur du réservoir une sonde, une lance ou une électrode, et avec une hotte aspirante placée autour du bouclier thermique et ouverte vers le bas, entourant le réservoir de manière à dépasser la fente circulaire, l'espace formé entre le bouclier thermique et la hotte aspirante étant relié à un dispositif d'aspiration, et une paroi de séparation (3) dépassant complètement la fente circulaire (2) étant disposée à l'intérieur de la hotte aspirante (1), cette paroi formant avec la paroi (7) de la hotte aspirante (1) une buse d'aspiration (8) qui entoure le réservoir (5).

2. Réservoir métallurgique selon revendication 1,

caractérisé en ce que

la paroi de séparation (3) est reliée hermétiquement au bouclier thermique (11) et dépasse vers le bas la fente (2) au-delà du bord (10) du réservoir (5).

3. Réservoir métallurgique selon revendication 3,

caractérisé en ce que

l'orifice d'aspiration de la buse d'aspiration (8), est dirigé sur la paroi (4) du réservoir (5).

4. Réservoir métallurgique selon les revendication 1 à 3,

caractérisé en ce que

la hotte aspirante (1) enveloppe extérieurement le bouclier thermique (11) uniquement dans une zone et que l'ouverture ou les ouvertures (12) sont hermétiquement séparées de l'atmosphère environnante.

5. Réservoir métallurgique selon les revendication 1 à 4,

caractérisé en ce que

la hotte aspirante (1) enveloppe entièrement par le haut le bouclier thermique (11l) et que, au-dessus de l'ouverture ou des ouvertures (12), des ouvertures sont pratiquées dans la hotte aspirante (1) munies chacune d'un joint.

6. Réservoir métallurgique selon les revendications 4 ou 5, caractérisé en ce que

le joint de l'ouverture ou des ouvertures (12) est un joint à labyrinthe relié au dispositif d'aspiration.

Fig.1

Fig.2